Europäisches Patentamt

European Patent Office

Office européen des brevets

(11) Numéro de publication: **0 152 706**
**A1**

# DEMANDE DE BREVET EUROPEEN

(21) Numéro de dépôt: 84401099.1

(22) Date de dépôt: 29.05.84

(51) Int. Cl.⁴: **G 01 D 5/26**

---

(30) Priorité: 03.06.83 FR 8309252

(43) Date de publication de la demande: 28.08.85
Bulletin 85/35

(84) Etats contractants désignés: **DE GB IT NL**

(71) Demandeur: **SEREG S.A., 12, place des Etats-Unis,
F-92120 Montrouge (FR)**

(72) Inventeur: **Fournier, Jacques, 19, rue de la Passerelle,
F-91220 Bretigny sur Orge (FR)**

(74) Mandataire: **Dronne, Guy et al, Giers
Schlumberger 12 Place des Etats-Unis B.P. 121,
F-92124 Montrouge (FR)**

---

(54) **Dispositif de télémesure par polarimétrie.**

(57) Un signal lumineux émis par une source (100) est soumis à une polarisation variable par des moyens modulateurs (110) et transmis à travers une fibre optique monomode vrillée (201) vers un polariseur de mesure (320) d'une part, et un polariseur de référence (330) d'autre part.

Les signaux en sortie de ces polariseurs sont transmis par des fibres (202, 203) vers des détecteurs (121, 122) produisant chacun des signaux dont on mesure (140) ensuite le déphasage, indicatif de l'angle relatif ($\alpha_o, \alpha_i$) des deux polariseurs de référence et de mesure.

DISPOSITIF DE TELEMESURE PAR POLARIMETRIE

1

La présente invention concerne un dispositif de télémesure utilisant un transducteur optique.

Un des buts du dispositif est de transmettre à distance, par des moyens purement optiques, une information recueillie dans une zone de mesure qui peut être par exemple une zone dangereuse (risque de déflagration) ou une zone soumise à des perturbations électromagnétiques qui excluent la transmission d'une information électrique.

De nombreux transducteurs optiques ont déjà été proposés. Les uns sont des dispositifs analogiques mesurant une variation d'intensité lumineuse, par exemple par obstruction partielle d'un faisceau, ou encore utilisant les variations de biréfringence de certains matériaux en fonction des contraintes qui leur sont appliquées. Ces dispositifs analogiques sont sujets à une perte de précision dans la ligne de transmission d'information (en raison de l'atténuation due à la ligne et à ses connecteurs), ainsi qu'au vieillissement des sources de lumière et des détecteurs amenant une baisse de sensibilité dans le temps. Pour cela, un étalonnage précis et individualisé doit être effectué pour chaque capteur, et doit être en outre réitéré ou vérifié à intervalles périodiques.

D'autres dispositifs utilisent le comptage des franges produites par un montage interférentiel. Il n'y a alors aucune perte de précision dans la ligne de transmission tant que le rapport signal/bruit reste convenable. Par contre, une panne momentanée d'alimentation rendrait ensuite l'information inutilisable. En effet le comptage du déplacement des franges est toujours indicatif d'une variation relative dans le temps : il y a lieu de connaître a priori une valeur absolue de la grandeur à mesurer pour servir d'origine, la valeur finale étant obtenue par cumul des variations détectées.

Un des buts de la présente invention est de pallier les inconvénients qui viennent d'être décrits, en transmettant une information à caractère temporel (c'est-à-dire représentée au moins par l'un des paramètres temps, fréquence ou phase d'un ou plusieurs signaux) obtenue par un transducteur basé sur un effet purement optique.

Pour cela, le dispositif de télémesure selon l'invention comprend :

. une source lumineuse non polarisée ;

. des premiers moyens polariseurs et des moyens modulateurs pour délivrer, à partir du signal émis par ladite source, un signal lumineux ayant une polarisation variable périodiquement en fonction du temps ;

. des moyens séparateurs pour fournir des premier et deuxième faisceaux identiques à partir du faisceau délivré par les moyens polariseurs et modulateurs ;

. des moyens polariseurs de référence recevant ledit premier faisceau pour transformer celui-ci en un signal périodique en intensité, ledit signal délivré formant une référence de phase ;

. des moyens polariseurs de mesure recevant ledit deuxième faisceau pour transformer celui-ci en un signal lumineux périodique en intensité, déphasé par rapport au signal délivré par les moyens polariseurs de référence d'une quantité fonction de la grandeur à mesurer ;

. des moyens d'analyse pour déterminer le déphasage entre les signaux lumineux issus des moyens polariseurs de référence et de mesure, et

. des moyens pour déterminer, en fonction dudit déphasage, l'intensité de la grandeur à mesurer.

Dans un premier mode de réalisation, les moyens modulateurs comprennent un polariseur rotatif apte à faire varier de façon périodique l'orientation absolue d'un plan de polarisation.

Dans la même façon, les moyens polariseurs de référence et de mesure peuvent comporter chacun un polariseur, les deux polariseurs étant disposés de manière que l'angle que forment leurs plans respectifs de polarisation varie en fonction de l'intensité de la grandeur à mesurer.

Dans un second mode de réalisation, les moyens modulateurs comprennent une lame biréfringente fixe soumise à une contrainte périodiquement variable, cette lame étant optiquement disposée entre un polariseur et un analyseur fixes, dont les plans de polarisation respectifs sont par exemple perpendiculaires entre eux, et orientés chacun à 45° par rapport à la direction d'application de la contrainte.

Dans la description et dans les revendications, par "lame biréfringente" il faut entendre : un conducteur optique actif qui, soumis à une contrainte, à un champ électrique ou un champ magnétique, présente des propriétés de biréfringence.

De la même façon, les moyens polariseurs de référence et de mesure peuvent comprendre chacun une lame biréfringente fixe soumise à une contrainte, cette lame étant disposée entre un polariseur et un analyseur fixes, dont les plans de polarisation respectifs sont par exemple perpendiculaires entre eux, et orientés chacun à 45° par rapport à la direction d'application de la contrainte, la contrainte de la lame biréfringente des moyens polariseurs de référence étant constante, et la contrainte de la lame biréfringente des moyens polariseurs de mesure étant fonction de l'intensité de la grandeur à mesurer.

Avantageusement, la lame biréfringente est une portion d'un guide optique transmettant le signal optique auquel est appliquée la polarisation.

De préférence, le signal lumineux émis par la source est tout d'abord transmis, avant modulation, vers des moyens polariseurs de compensation, puis retransmis vers les moyens modulateurs et enfin renvoyé vers les moyens séparateurs, les moyens polariseurs de compensation appliquant au signal lumineux qui les traverse une polarisation fonction d'un paramètre à compenser.

Dans ce cas, de préférence, la transmission du signal optique des moyens polariseurs de compensation vers les moyens modulateurs, et la transmission du signal optique des moyens modulateurs vers les moyens séparateurs sont toutes deux effectuées par un même guide optique.

En variante ou en complément, le dispositif peut également comporter un guide optique pour retransmettre le signal issu des moyens polariseurs de compensation vers les moyens d'analyse, ces derniers étant également aptes à déterminer le déphasage entre les intensités lumineuses des moyens polariseurs de référence et de compensation, de manière à corriger la détermination de grandeur mesurée en fonction du paramètre à compenser.

Avantageusement, ce guide optique effectue alors également la transmission du signal lumineux émis par la source vers les moyens polariseurs de compensation.

D'autres caractéristiques et avantages de l'invention apparaîtront à la lecture de la description détaillée ci-dessous, faite en référence aux dessins annexés, sur lesquels :

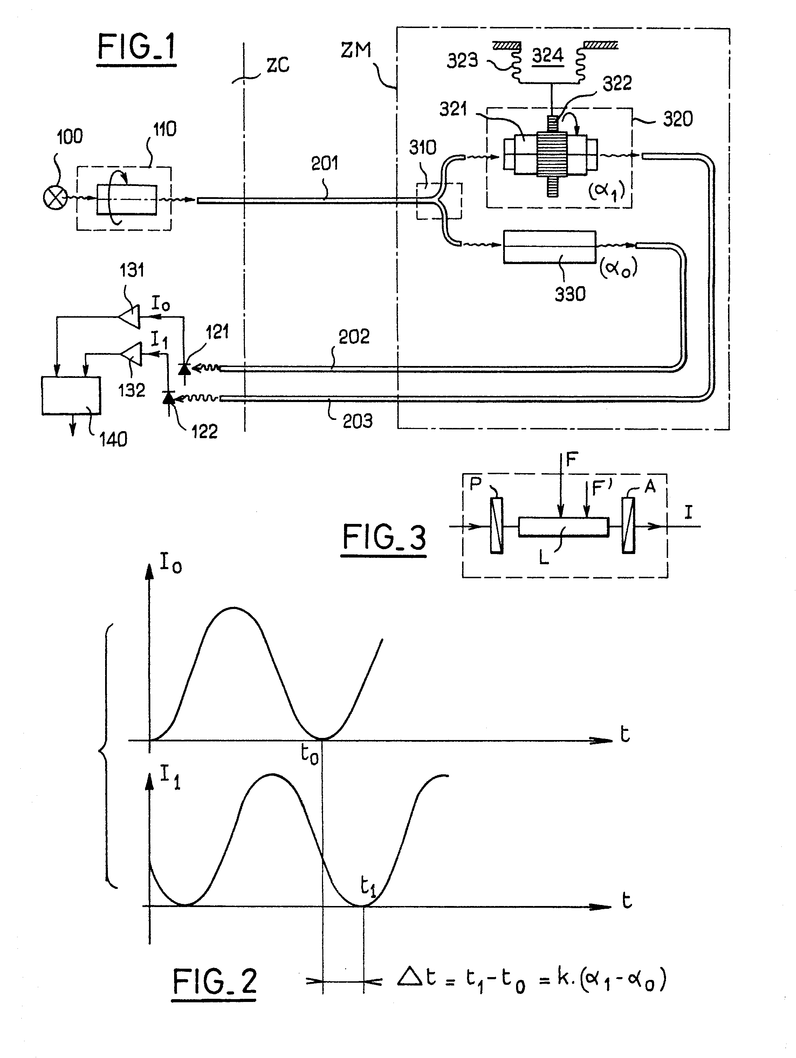

. la figure 1 est une vue schématique du dispositif selon un premier mode de réalisation,

. la figure 2 montre l'allure des signaux délivrés par le dispositif de la figure 1,

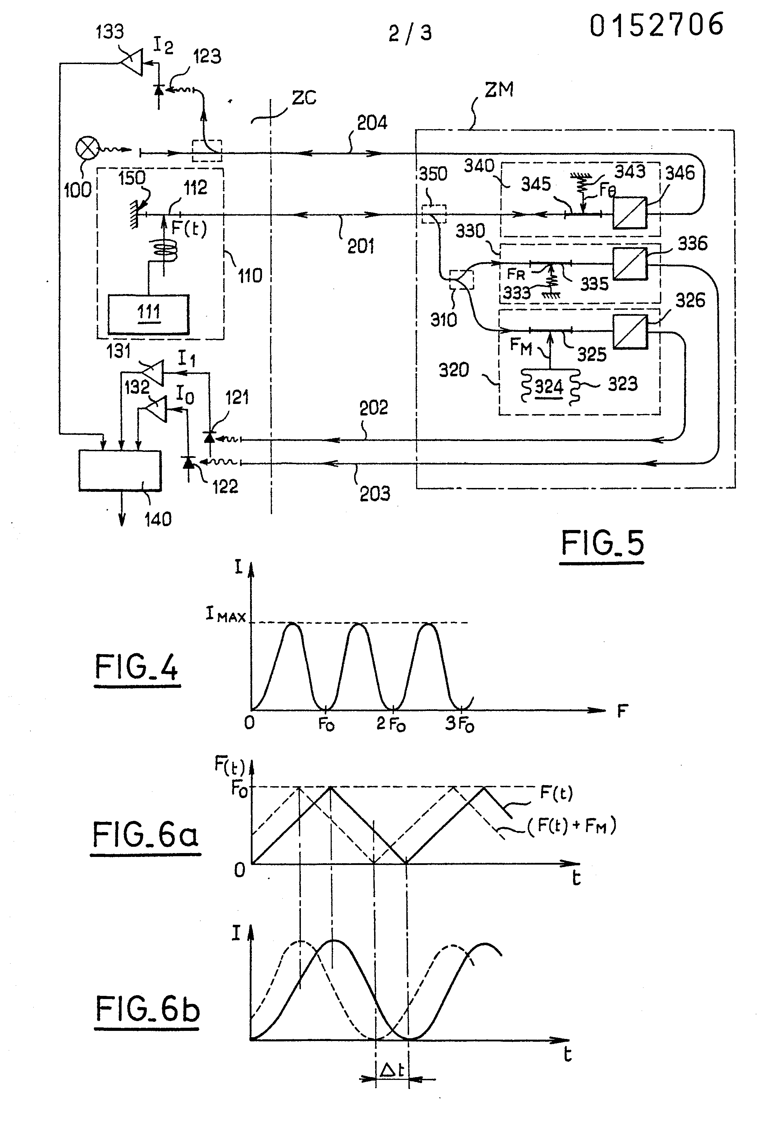

. la figure 3 montre un ensemble optique pouvant, en variante, remplacer les polariseurs tournants de la figure 1,

. la figure 4 montre la variation d'intensité lumineuse du signal transmis par le système optique de la figure 3,

. la figure 5 représente un second mode de réalisation de l'invention,

. les figures 6a et 6b montrent respectivement les signaux de modulation et les signaux recueillis par les détecteurs, pour le dispositif de la figure 5,

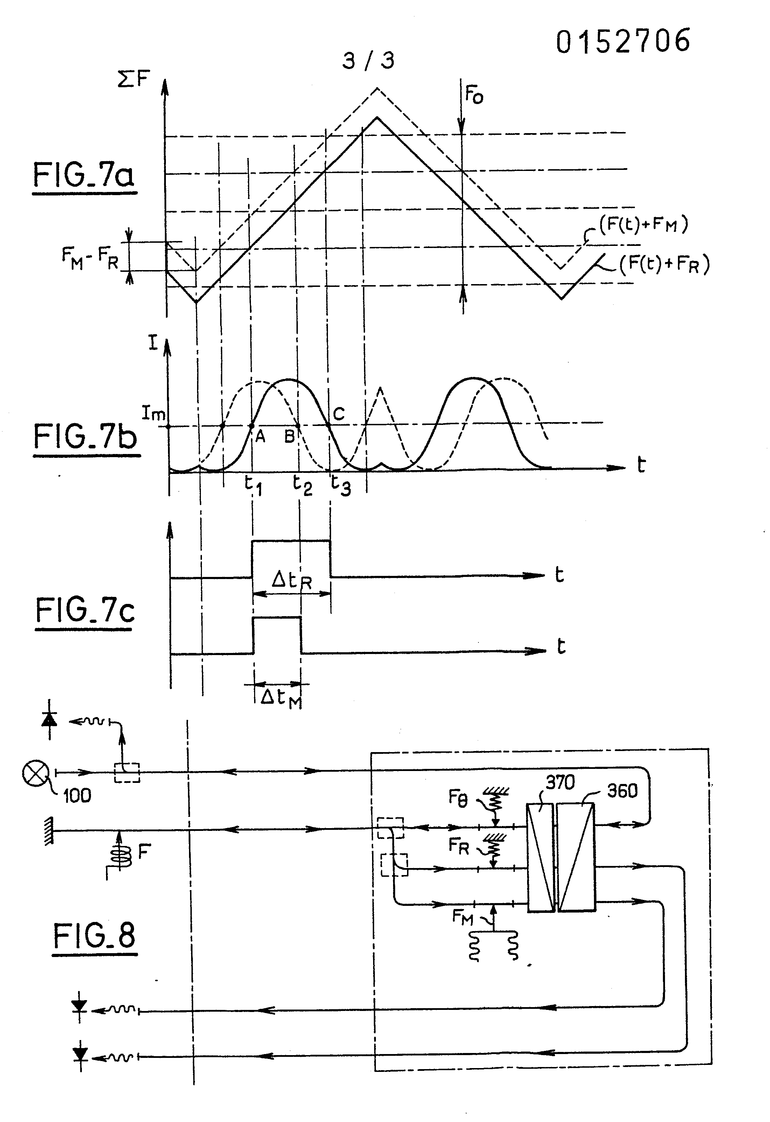

. les figures 7a à 7c explicitent un mode de fonctionnement possible du dispositif de la figure 5,

. la figure 8 est une variante de la figure 5, où le système optique utilisé a permis d'apporter une simplification du montage.

Bien qu'on décrira par la suite plus particulièrement des mesures de pression ou de température, il doit être entendu que l'invention est applicable à la mesure de nombreux autres paramètres physiques.

En effet, le principe de l'invention est d'effectuer une mesure polarimétrique, c'est-à-dire une mesure d'activité optique variable en fonction d'un paramètre à mesurer. On décrira en particulier le cas d'un polariseur tournant entraîné mécaniquement pour faire varier un plan de polarisation rectiligne, ainsi qu'une lame biréfringente placée sous contrainte. D'autres effets peuvent cependant être utilisés : on peut citer notamment l'effet Faraday de variation d'activité optique en fonction d'un champ magnétique, et l'effet Kerr de variation de l'activité optique en fonction du champ électrique appliqué.

La figure 1 représente schématiquement un dispositif selon un premier mode de réalisation de l'invention : une partie de ce dispositif est situé dans une zone de mesure ZM, par exemple une zone dangereuse où existent des risques de déflagration, ou encore une zone soumise à de fortes perturbations électromagnétiques.

Une autre partie du dispositif est située dans une zone de commande ZC, par exemple une salle de contrôle d'une installation, située en dehors de toute zone dangereuse et dans laquelle l'énergie électrique peut être amenée sans contrainte particulière, et où les signaux optiques seront transformés en signaux électriques en vue d'un traitement ultérieur.

Les deux zones ZC et ZM sont reliées par des guides d'ondes ou fibres optiques tels que 201 à 203. En zone ZC, une source lumineuse 100 émet une lumière non polarisée, de préférence une lumière monochronomatique, qui est ensuite polarisée rectilignement par un polariseur 110 ; cette polarisation est modulée, c'est-à-dire que l'angle de polarisation est rendu variable périodiquement en fonction du temps, par exemple au moyen d'une rotation mécanique dudit polariseur, donc apte à faire varier de façon périodique l'orientation absolue du plan de polarisation.

Le signal modulé est transmis par un premier guide optique 201 à un séparateur 310, qui dirige identiquement le signal lumineux vers deux chemins optiques distincts. Ce séparateur n'a pas été décrit en détail ; il peut par exemple comprendre une lame semi-réfléchissante.

Le signal lumineux du premier chemin optique est ensuite dirigé vers un polariseur 320, dont le plan de polarisation rectiligne peut varier en fonction d'une grandeur à mesurer. Si, par exemple, la grandeur à mesurer est une pression, ce polariseur de mesure peut être par exemple un polariseur rotatif 321 entraîné par une crémaillère 322 liée à un soufflet 323 dont la déformation est fonction de la pression régnant dans une enceinte 324 : l'angle de polarisation variera ainsi de façon sensiblement linéaire avec la pression à mesurer.

Le second chemin optique comprend un autre polariseur 330 dont l'angle de polarisation est fixe, au contraire du polariseur de mesure 320.

Les signaux lumineux en sortie du polariseur de mesure 320 et du polariseur de référence 330 sont retransmis vers la zone ZC au moyen de deux fibres optiques propres 202 et 203 respectivement.

A l'extrémité de ces fibres optiques 202 et 203 sont placés des détecteurs optoélectroniques 121, 122 qui produiront un courant $Io$ ou $Il$ proportionnel à l'intensité lumineuse du signal reçu.

Les courants $Io$, $Il$ sont ensuite amplifiés par des amplificateurs 131, 132 et dirigés vers un circuit 140 pour analyser leur phase relative, comme on le décrira par la suite.

Pour que le signal en sortie des moyens modulateurs 110 conserve une polarisation, on emploie pour le guide optique 201 une fibre monomode, et, de préférence, une fibre monomode vrillée : en effet, la fibre peut être optiquement considérée comme équivalente à une lame biréfringente, dont le déphasage entre l'onde orginaire et l'onde extraordinaire variera en fonction de sa longueur d'une part, mais également à cause de l'activité optique induite par contrainte de torsion dans la fibre. Cet effet de biréfringence altère le contraste du signal lumineux en sortie de fibre, à tel point qu'il peut être impossible, dans certaines configurations, de distinguer les maxima des minima d'intensité lumineuse. Cet inconvénient disparaît lorsque la fibre est vrillée.

Par contre, le vrillage empêche de connaître l'orientation exacte du plan de polarisation en sortie de fibre, cette orientation exacte dépendant aussi bien de la géométrie du guide que de son matériau et de la température.

Cette impossibilité de connaître l'orientation en sortie du plan de polarisation n'est cependant pas un inconvénient, car, grâce aux moyens diviseurs 310, l'orientation du plan de polarisation sera la même à l'entrée des deux polariseurs de mesure 320 et de référence 330.

Dans la mesure où l'on s'intéresse, en sortie, uniquement aux intensités lumineuses et non à l'orientation des plans de polarisation, on peut par contre utiliser pour les guides optiques 202 et 203 des fibres multimodes, qui ne conservent pas au signal lumineux sa polarisation.

Les signaux recueillis par les détecteurs 121 et 122 sont représentés figure 2 : l'intensité lumineuse en sortie passe par des minima, à des instants $t_o$ et $t_1$, qui sont déphasés d'une valeur $\Delta t$ elle-même représentative de la différence $\alpha_1 - \alpha_o$ d'orientation des plans de polarisation des moyens polariseurs de mesure ($\alpha_1$) et des moyens polariseurs de référence ($\alpha_o$).

De cette manière, on a transformé une mesure d'angle en une mesure de déphasage, puisque l'on ne fait qu'observer le glissement dans le temps d'un signal par rapport à l'autre, ces deux signaux étant deux signaux de même fréquence (la fréquence à laquelle les moyens modulateurs 110 modulent le signal lumineux émis par la source).

La mesure de déphasage étant une mesure temporelle, on s'affranchit ainsi des inconvénients précités liés aux transducteurs analogiques et aux transducteurs interférentiels.

En variante, on peut remplacer un ou plusieurs des polariseurs 110, 320, 330 de la figure 1 par un ensemble optique basé sur la biréfringence artificielle, schématisé figure 3. Ce système présente l'avantage par rapport au polariseur tournant, notamment, d'être un système purement statique.

Un premier polariseur P transforme la lumière incidente en lumière rectilignement polarisée ; ce signal traverse une lame biréfringente L (qui peut être par exemple un segment de fibre optique) soumise à une contrainte F. La lumière qui sort de cette lame L est alors polarisée elliptiquement, et un second polariseur A (agissant en analyseur), transforme la polarisation elliptique en une polarisation rectiligne.

Le polariseur P et l'analyseur A ont leurs plans de polarisation respectifs perpendiculaires entre eux, et orientés chacun à 45° par rapport à la direction de la contrainte, c'est-à-dire la direction de la force F.

La variation de la contrainte faisant varier de façon continue la différence des indices de réfraction ordinaire et extraordinaire, ce système optique est équivalent à deux polariseurs tournants dont l'orientation relative des plans de polarisation varierait en fonction de la force appliquée.

L'intensité I en sortie de cet ensemble optique est représentée figure 4 : celle-ci varie entre une valeur nulle et une valeur maximale $I_{MAX}$, avec une périodicité $F_o$, représentant la force nécessaire pour donner l'équivalent d'un demi-tour du polariseur.

Si l'on applique à la lame biréfringente L une seconde force F'dans la même direction que la première force F, l'intensité lumineuse variera avec F+F'. F peut être par exemple une force modulante périodiquement variable, et F' une force constante, ou encore proportionnelle à une grandeur à mesurer.

Les effets de biréfringence artifielle qui viennent d'être expliqués sont en particulier utilisés dans le second mode de réalisation de l'invention, représenté figure 5.

Dans ce mode de réalisation, le signal lumineux modulé par les moyens modulateurs 110 est transmis, comme précédemment, par une fibre monomode vrillée 201 vers le séparateur 310 qui répartit le signal entre les moyens polariseurs de mesure 320 et les moyens polariseurs de référence 330. Les signaux de sortie sont retournés par des fibres multimodes 202, 203 vers des détecteurs optoélectroniques 121, 122 pour être amplifiés et analysés comme précédemment.

On a également représenté une branche supplémentaire permettant une mesure additionnelle de température en vue d'une compensation des valeurs de pression mesurée. Cette branche de mesure de température comprend des moyens polariseurs de compensation 340 (organisés de la même manière que les moyens polariseurs de mesure 320) délivrant en sortie un signal renvoyé par un quatrième guide optique 204 vers un détecteur optoélectronique 123 et un amplificateur 133, pour comparaison avec le signal issu des moyens polariseurs de référence, de la même façon que pour la mesure proprement dite.

Un diviseur optique additionnel 350 permet de répartir le faisceau issu des moyens modulateurs 110 d'une part vers le polariseur de compensation 340, et d'autre part vers le diviseur optique initial 310.

Les moyens polariseurs de mesure 320 comprennent une lame biréfringente 325, par exemple une portion de fibre optique, soumise à une force $F_M$ exercée par le soufflet 323 soumis à la pression régnant dans l'enceinte 324. Un polariseur 326 joue le rôle de l'analyseur A de la figure 3 (on verra par la suite comment la lumière issue de la source est polarisée).

Les moyens polariseurs de référence 330 comprennent une lame biréfringente 335, par exemple une portion de fibre optique, soumise à une force constante $F_R$, par exemple exercée par un ressort 333 insensible à la température. Un polariseur 336 joue le rôle de l'analyseur A de la figure 3.

Les moyens polariseurs de compensation 340 comprennent une lame biréfringente 345, par exemple une portion de fibre optique, soumise à une force $F_\theta$ par exemple exercée par un ressort 343 dont le module d'Young est variable avec la température. Un polariseur 346 joue le rôle de l'analyseur de la figure 3.

Mais ce polariseur 346 joue également le rôle du polariseur P de la figure 3. En effet, le signal lumineux émis par la source 100 n'est pas modulé immédiatement par interposition des moyens modulateurs. Ce signal

(non polarisé) est tout d'abord amené de la zone ZC vers la zone ZM par une fibre optique, qui avantageusement peut être la même fibre optique 204 que celle servant au retour du signal issu des moyens modulateurs de compensation 340. Le signal lumineux passe une première fois (de la droite vers la gauche sur le dessin) dans le polariseur 346 - qui joue alors le rôle du polariseur P de la figure 3 - et la lumière qui en ressort est donc polarisée rectilignement. Elle est ensuite polarisée elliptiquement du fait de l'application d'une première force $F_\theta$.

Le signal lumineux est alors dirigé vers la zone ZC, de préférence par la même fibre optique (fibre monomode vrillée conservant la polarisation) que la fibre 201 précédemment évoquée.

Dans la zone ZC, une force variable modulante $F(t)$ produite par un générateur 111 est appliquée à une portion 112 de la fibre formant lame biréfringente, modifiant ainsi une seconde fois la polarisation (elliptique) du signal transmis.

Ce signal se réfléchit sur un miroir 150 pour être renvoyé dans l'autre sens dans la même fibre 201 (on notera que la force modulante $F(t)$ est "vue" deux fois, avant et après réflexion).

La lumière est ensuite guidée dans la fibre 201 (de la gauche vers la droite sur le dessin) puis dirigée vers chacun des segments 345, 335, 325 où le signal optique reçoit à nouveau une modulation, l'influence des forces $F_M$, $F$, $F_\theta$ créant ainsi une ellipticité instantanée propre à chaque branche.

Le signal final résultant traverse ensuite chacun des polariseurs 346, 336, 326 pour fournir un signal lumineux (polarisé rectilignement, mais ceci est sans importance) dont l'intensité varie en fonction des différentes forces appliquées aux fibres. Les signaux sont ensuite retournés par les fibres multimodes 204, 202, 203 vers les détecteurs et le circuit d'analyse.

C'est ainsi que l'on voit que le polariseur 346 joue le rôle d'un analyseur lorsqu'il est traversé de la gauche vers la droite, et d'un polariseur lorsqu'il est traversé dans le sens contraire. Les polariseurs 336 et 326 ne sont, quant à eux, traversés que dans un seul sens et jouent toujours le rôle de l'analyseur.

On suppose que les différents polariseurs et analyseurs sont correctement orientés entre eux et par rapport à la direction des différentes forces appliquées.

Un intérêt particulier de l'aller-retour dans la fibre monomode vrillée 201 est d'éliminer l'effet de l'activité optique dû au vrillage, et par là même les variations de cette activité avec la température : l'orientation du plan de polarisation restera donc inchangée par rapport à l'orientation des polariseurs et analyseurs, qui auront été réglés pour obtenir le meilleur contraste.

On décrira maintenant la manière dont sont traités les différents signaux produits par les détecteurs optoélectroniques.

Tout d'abord, si l'on considère l'hypothèse simplificatrice d'une fibre unique soumise seulement à une force de modulation F(t) et à une force de mesure $F_M$, on obtiendra les courbes des figures 6a et 6b : sur la figure 6a, la courbe en trait plein correspond à un signal appliqué au modulateur seul, variant linéairement avec le temps (signal triangulaire). L'intensité lumineuse en sortie de fibre est celle indiquée sur la figure 6b en trait plein (dans un premier temps, on supposera que la force modulante varie entre une valeur nulle et une valeur égale à la valeur $F_O$ définie en référence à la courbe de la figure 4).

On voit que, si l'on applique en plus de la force modulante une force $F_M$, les courbes des figures 6a et 6b vont se décaler vers la gauche (courbes en traits interrompus) d'une valeur $\Delta_t$ variant comme la force $F_M$ ; on démontre en outre qu'il y a proportionnalité entre le décalage $\Delta_t$ et la force $F_M$ correspondante appliquée .

En pratique, il peut être difficile de connaître précisément la valeur $F_O$ précédemment définie  et de régler l'amplitude de la modulation sur cette valeur.

On préfère alors donner à la force de modulation une valeur de crête telle que la force totale, exercée sur la fibre côté référence, ait une amplitude crête à crête supérieure à $2F_O$, de sorte que le signal en sortie des moyens polariseurs de référence contienne deux minima voisins.

La figure 7a représente la somme des forces appliquées à la fibre, et la figure 7b la valeur de l'intensité lumineuse reçue par le détecteur en sortie des moyens polariseurs de référence dans ce dernier cas.

Lorsqu'une force de mesure $F_M$ supérieure à $F_R$ est appliquée, la courbe de la figure 7a est décalée vers le haut d'une valeur $F_M - F_R$ et la courbe de la figure 7b décalée vers la gauche d'une valeur $\Delta_t$ proportionnelle à la valeur $F_M - F_R$.

Comme les signaux d'intensité lumineuse sont traduits en signaux électriques alternatifs variant autour d'une valeur moyenne $I_m$ toujours identique (seule la phase varie) les points A, B et C repérés sur la figure 7b correspondront à des passages à zéro des signaux correspondants.

Au moment de la détection du point A, on déclenche un comptage qui s'arrête en C pour le signal issu des moyens polariseurs de référence, et en B pour le signal issu des moyens polariseurs de mesure. La différence de durée $\Delta t_R - \Delta t_M$ des deux temps de comptage (figure 7c) est donc bien proportionnelle à la différence $F_M - F_R$ des forces appliquées.

Dans ce qui précède, l'influence des moyens polariseurs de compensation, sensibles à la température, n'a pas été prise en compte par souci de clarté, mais le même raisonnement est applicable. On peut donc obtenir une information de température susceptible d'être utilisée à des fins de correction.

En particulier, si l'on désigne par $t_1$, $t_2$, $t_3$ les instants des passages à zéro A, B et C repérés sur la figure 7b, et par $t_4$ l'instant du passage à zéro correspondant au point B de la figure 7b, mais pour le signal issu des moyens polariseurs de compensation, on démontre que :

$$\frac{t_3 - t_2}{t_4 - t_3} = \frac{F_M - F_R}{F_R}$$

ce qui donne bien une mesure de $F_M$ indépendante de la température. On démontre également que :

$$\frac{t_3 - t_4}{t_3 - t_1} = 2\, k_s . F_R . \beta . \theta$$

$k_s$ étant le coefficient de biréfringence de la fibre à la température du site de mesure (zone ZM),

$\beta$ étant le coefficient de température du module d'élasticité du ressort sensible à la température, et

$\theta$ étant la température.

On voit que l'analyse des signaux en sortie des différents systèmes polariseurs permet d'obtenir une mesure de la grandeur à mesurer (ici la pression) et de fournir une information de température susceptible d'être utilisée directement ou à des fins de correction.

La figure 8 représente une variante de la figure 5, à laquelle a été apportée une simplification : les polariseurs 346, 336, et 326 sont regroupés en un polariseur unique 360.

En outre, à cet élément optique 360 est combinée une lame quart d'onde 370.

La lumière non polarisée issue de la source 100 traverse une première fois l'ensemble optique 360, 370 de droite à gauche : le premier élément 360 transforme la lumière non polarisée en une lumière polarisée rectilignement, et la lame quart d'onde 370 transforme cette lumière polarisée rectilignement en une lumière polarisée circulairement.

Après application des différentes forces, la polarisation circulaire est transformée en une polarisation elliptique, qui est elle-même transformée en une polarisation rectiligne par la lame quart d'onde 370, traversée de gauche à droite. Le polariseur 360 qui est traversé à la suite joue alors le rôle classique d'analyseur. Ainsi le signal lumineux en sortie a une intensité variable en fonction des différentes forces appliquées à la fibre sur le trajet lumineux (ou, en d'autres termes, de la polarisation elliptique finale qui en résulte).

REVENDICATIONS

1. Un dispositif de mesure d'une grandeur, caractérisé en ce qu'il comprend :

. une source lumineuse (100) non polarisée ;

. des premiers moyens polariseurs et des moyens modulateurs (110) pour délivrer, à partir du signal émis par ladite source, un signal lumineux ayant une polarisation variable périodiquement en fonction du temps ;

. des moyens séparateurs (310) pour fournir des premier et deuxième faisceaux identiques à partir du faisceau délivré par les moyens polariseurs et modulateurs ;

. des moyens polariseurs de référence (330) recevant ledit premier faisceau pour transformer celui-ci en un signal périodique en intensité, ledit signal délivré formant une référence de phase ;

. des moyens polariseurs de mesure (320) recevant ledit deuxième faisceau pour transformer celui-ci en un signal lumineux périodique en intensité, déphasé par rapport au signal délivré par les moyens polariseurs de référence d'une quantité fonction de la grandeur à mesurer ;

. des moyens d'analyse (140) pour déterminer le déphasage entre les signaux lumineux issus des moyens polariseurs de référence et de mesure, et

. des moyens pour déterminer, en fonction dudit déphasage, l'intensité de la grandeur à mesurer.

2. Un dispositif selon la revendication 1, caractérisé en ce que les moyens modulateurs comprennent un polariseur rotatif apte à faire varier de façon périodique l'orientation absolue d'un plan de polarisation.

3. Un dispositif selon la revendication 1, caractérisé en ce que les moyens polariseurs de référence et de mesure comportent chacun un polariseur, les deux polariseurs étant disposés de manière que l'angle que forment leurs plans respectifs de polarisation varie en fonction de l'intensité de la grandeur à mesurer.

4. Un dispositif selon la revendication 1, caractérisé en ce que les moyens modulateurs comprennent une lame biréfringente fixe (112) soumise à une contrainte (F(t)) périodiquement variable, cette lame étant optiquement disposée entre un polariseur et un analyseur fixes.

5. Un dispositif selon la revendication 1, caractérisé en ce que les moyens polariseurs de référence et de mesure comprennent chacun une lame biréfringente fixe (325 ; 335) soumise à une contrainte ($F_R$ ; $F_M$), cette lame étant optiquement disposée entre un polariseur et un analyseur fixes, la contrainte de la lame biréfringente des moyens polariseurs de référence étant constante, et la contrainte de la lame biréfringente des moyens polariseurs de mesure étant fonction de l'intensité de la grandeur à mesurer.

6. Un dispositif selon l'une des revendications 4 et 5, caractérisé en ce que la lame biréfringente est une portion d'un guide optique transmettant le signal optique auquel est appliquée la polarisation.

7. Un dispositif selon la revendication 1, caractérisé en ce que le signal lumineux émis par la source est tout d'abord transmis, avant modulation, vers des moyens polariseurs de compensation (340), puis retransmis vers les moyens modulateurs et enfin renvoyé vers les moyens séparateurs, les moyens polariseurs de compensation appliquant au signal lumineux qui les traverse une polarisation fonction d'un paramètre à compenser.

8. Un dispositif selon la revendication 7, caractérisé en ce que la transmission du signal optique des moyens polariseurs de compensation vers les moyens modulateurs, et la transmission du signal optique des moyens modulateurs vers les moyens séparateurs, sont toutes deux effectuées par un même guide optique (201).

9. Un dispositif selon la revendication 7, caractérisé en ce qu'il comporte également un guide optique (204) pour retransmettre le signal issu des moyens polariseurs de compensation vers les moyens d'analyse, ces derniers étant également aptes à déterminer le déphasage entre les intensités lumineuses des moyens polariseurs de référence et de compensation, de manière à corriger la détermination de grandeur mesurée en fonction du paramètre à compenser.

10. Un dispositif selon la revendication 9, caractérisé en ce que ledit guide optique (204) effectue également la transmission du signal lumineux émis par la source vers les moyens polariseurs de compensation.

11. Un dispositif selon la revendication 7, caractérisé en ce que les moyens polariseurs de compensation comprennent une lame biréfringente fixe (343) soumise à une contrainte ($F_\theta$) fonction de la température, et disposée optiquement entre un polariseur et un analyseur fixes.

12. Un dispositif selon l'une des revendications 4, 5 et 11, caractérisé en ce qu'au moins l'une des paires polariseur-analyseur est constituée par un élément optique unique (346), traversé une première fois par le signal lumineux émis par la source avant modulation, pour former polariseur, et une seconde fois par le signal lumineux modulé après traversée de chaque lame biréfringente, pour former analyseur.

13. Un dispositif selon la revendication 12, caractérisé en ce que chaque paire polariseur-analyseur est constituée par un élément optique unique (360), cet élément étant en outre commun aux moyens polariseurs de mesure, de référence et de modulation.

14. Un dispositif selon la revendication 13, caractérisé en ce que l'élément optique unique coopère avec une lame quart d'onde (370) apte à transformer la polarisation rectiligne en sortie du polariseur en une polarisation circulaire, et la polarisation elliptique en entrée de l'analyseur en polarisation rectiligne.

15. Un dispositif selon l'une des revendications précédentes, caractérisé en ce que le guide optique (201) transmettant le signal des moyens modulateurs vers les moyens séparateurs est une fibre monomode vrillée.

FIG.1

FIG.3

FIG.2

$$\triangle t = t_1 - t_0 = k.(\alpha_1 - \alpha_0)$$

FIG.5

FIG.4

FIG.6a

FIG.6b

0152706

## FIG. 7a

$\Sigma F$

$F_O$

$F_M - F_R$

$(F(t) + F_M)$

$(F(t) + F_R)$

## FIG. 7b

$I$

$I_m$

A  B  C

$t_1$  $t_2$  $t_3$

$t$

## FIG. 7c

$\Delta t_R$

$t$

$t$

$\Delta t_M$

## FIG. 8

100

F

$F_\theta$

$F_R$

$F_M$

370  360

Office européen
des brevets

**RAPPORT DE RECHERCHE EUROPEENNE**

0152706
Numéro de la demande

EP 84 40 1099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 096 762 (U.C.L.) <br> * Résumé; figures * | 1 | G 01 D 5/26 |
| A | WO-A-8 303 684 (STANFORD) <br> * Résumé; figure 1 * | 1 | |
| A | DE-A-3 031 961 (LICENTIA-PATENT) <br> * Figures 1,3; revendication 1 * | 1 | |

DOMAINES TECHNIQUES
RECHERCHES (Int. Cl.4)

G 01 D 5
G 01 D 11
G 01 L 1

Le présent rapport de recherche a été établi pour toutes les revendications

| Lieu de la recherche | Date d'achèvement de la recherche | Examinateur |
|---|---|---|
| LA HAYE | 15-05-1985 | LLOYD P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82